# EUROPÄISCHE PATENTSCHRIFT

(11) **EP 1 715 442 B1**
(45) Veröffentlichungstag und Bekanntmachung des Hinweises auf die Patenterteilung: **08.09.2010**
(21) Anmeldenummer: 06008174.2
(22) Anmeldetag: 20.04.2006
(51) Int. Cl.: G06K 9/00, G06T 7/00

(54) **Verfahren zum automatischen Erkennen von Reliefinformationen auf Oberflächen**
Method for automatically detecting relief information on surfaces
Procédé destiné à la reconnaissance automatique d'informations de relief sur des surfaces

(30) Priorität: 20.04.2005 DE 102005018456
(43) Veröffentlichungstag der Anmeldung: 25.10.2006
(73) Patentinhaber: PSVV Pöhlandt-Spiekermann-Vermögensverwaltung GbR, 68219 Mannheim (DE)
(72) Erfinder: vom Stein, Dirk, 76133 Karlsruhe (DE)
(74) Vertreter: Maisch, Thomas

(56) Entgegenhaltungen:
- EP-A1- 1 215 881
- DE-A1- 10 143 522
- US-B1- 6 748 112
- MASUDA T: "Filling the signed distance field by fitting local quadrics" 3D DATA PROCESSING, VISUALIZATION AND TRANSMISSION, 2004. 3DPVT 2004. PROCEEDINGS. 2ND INTERNATIONAL SYMPOSIUM ON THESSALONIKI, GREECE 6-9 SEPT. 2004, PISCATAWAY, NJ, USA,IEEE, 6. September 2004 (2004-09-06), Seiten 1003-1010, XP010725314 ISBN: 0-7695-2223-8

## Beschreibung

Die Erfindung betrifft ein Verfahren zum automatischen Erkennen von Reliefinformationen auf Oberflächen, insbesondere zum Lesen von Reliefschriften auf Produkten oder deren Verpackungen, vorzugsweise auf Gussteilen.

Zunächst einmal sei angemerkt, dass es hier ganz allgemein um ein Verfahren zum automatischen Erkennen von Reliefinformationen jedweder Art geht. Bei diesen Reliefinformationen kann es sich um beliebige Geometrien, insbesondere aber um Buchstaben und Zahlen, handeln. Wesentlich ist dabei, dass die Informationen in Bezug auf eine Oberfläche erhaben oder vertieft ausgebildet sind.

Zur Identifikation eines Produktes wird häufig eine Kennzeichnung auf dem Produkt selbst oder auf seiner Verpackung angebracht. Diese Kennzeichnung kann unterschiedlichste Informationen beinhalten, beispielsweise Informationen betreffend den Hersteller, die Produktgruppe und/oder Produktuntergruppe, die Teilenummer, das Herstelldatum, die Herstellzeit, die Chargennummer oder eine individuelle Auszeichnung eines jeden einzelnen Objekts mit einer eindeutigen Seriennummer, etc. Solche Kennzeichnungen erfolgen in Form von Schriftzeichen, Zahlen, Symbolen, Logos, Strichcodes, Matrix-Codes, etc. Sie dienen beispielsweise zur Verfolgung des Materialflusses beim Hersteller und/oder beim gewerblichen Abnehmer, zur weiterreichenden Verknüpfung mit zugeordneten Informationen, beispielsweise Preisinformationen, zur Realisierung gezielter Rückrufaktionen, zur Identifizierung des jeweiligen Produkts, usw.

Unterschiedlichste Kennzeichnungen sind aus der Praxis bekannt, wobei solche Kennzeichnungen beispielsweise durch unmittelbares Bedrucken der Ware selbst oder durch Aufkleben bzw. sonstige Anbringung von Etiketten erfolgt. Bei der Kennzeichnung von Produkten ist von ganz besonderer Bedeutung, dass die Kennzeichnung relativ frühzeitig im Produktionsprozess an dem Produkt bzw. auf dem Produkt vorgesehen wird und dabei mit dem Produkt dauerhaft verbunden wird, wobei darauf zu achten ist, dass die Kennzeichnung die weiteren Produktionsschritte unbeschadet übersteht. Oftmals wird des weiteren verlangt, dass die einmal aufgebrachte Information über die Dauer der Handhabung hinweg nicht verändert wird, um nämlich eine eindeutige Zuordnung zwischen der Kennzeichnung und dem konkreten Produkt zu gewährleisten.

Ein Kennzeichnungsbedarf der voranstehend genannten Art existiert u.a. auch bei Gussstücken, wobei dort ein Bedrucken mit der Kennzeichnung oder ein Aufkleben bzw. Anbringen von Etiketten ausgeschlossen ist. So könnte man die Kennzeichnung frühestens nach dem Abkühlen des Gussstücks anbringen, wobei der Träger der Kennzeichnung robust genug sein müsste, um die nachfolgenden Prozessschritte wie Strahlen, Lackieren, Nachbearbeiten, Handling, etc. unbeschadet zu überstehen.

So hat es sich bei Gussstücken bewährt, die das Gussstück betreffende Kennzeichnung in Form von Reliefschriften dem Gussstück zuzuordnen, wobei es sich dabei um erhabene oder vertiefte Schriften bzw. Zeichen, Zahlen oder sonstige Symbole handeln kann. Ganz allgemein kann man von einer Reliefinformation sprechen, die regelmäßig vor dem Abgießen durch inverse Beschriftung von Sandkern bzw. Sandform erfolgt. Dies ist beispielsweise durch eine entsprechende Modifikation des Werkzeugs oder der Modellplatte möglich, in der der zum Gießen dienende Kern oder die Form hergestellt wird. Auch ist es möglich, austauschbare Zeichen zu verwenden, beispielsweise unter Nutzung eines Zählwerks mit beweglich zugeordneten Lettern, so dass eine Identifizierung des jeweiligen Gussstücks möglich ist. Des Weiteren sind direkte Manipulationen am Sandkern bzw. an der Sandform durch mechanische Gravur, Laserbeschriftung oder ähnliche Verfahren denkbar.

Wie bereits zuvor erwähnt, dienen die beispielsweise einem Gussstück zugeordneten Reliefinformationen u.a. auch zur Identifikation des Gussstücks über die Bearbeitungsstationen hinweg. Dabei ist es erforderlich, die jeweiligen Reliefinformationen an unterschiedlichen Stationen abzulesen. Im Falle von Klarschrift kann das Ablesen der Information durch den Menschen selbst erfolgen. Soll jedoch ein automatisches Lesen der Reliefinformationen stattfinden, sind besondere Verfahren zur Zeichenerkennung anzuwenden.

Zur automatischen Erkennung von flächigen Informationen, beispielsweise von Schriften, werden üblicherweise Grauwertbilder herangezogen, die die zu lesende Information üblicherweise als dunkle Fläche vor hellem Hintergrund enthalten. Dies entspricht der üblichen und dabei sinnvollen Vorgehensweise zur automatischen Erkennung flächiger Informationen, da insbesondere bei gedruckten Vorlagen sogenannte Reflektanzinformationen vorliegen, die aus der unterschiedlichen Helligkeit oder Farbe der die Information darstellenden Flächen in Bezug auf den Hintergrund resultieren.

Liegt die flächige Information nicht in der Reflektanz der jeweiligen Schriftzeichen, reichen nämlich die Unterschiede in der Helligkeit bzw. Farbe zwischen den Schriftzeichen und dem Untergrund bzw. Hintergrund nicht aus, ist das automatische Lesen solcher Informationen problematisch. Dies gilt auch dann, wenn es sich bei den zu lesenden Informationen um erhabene oder vertiefte Reliefinformationen wie beispielsweise Schriften handelt, wie sie nämlich üblicherweise bei Gussteilen zum Einsatz kommen. Legt man hier 2D-Bilder, d.h. Grauwert- oder Farbbilder, zugrunde, erhält man allenfalls indirekte Informationen über die Topologie der Reliefinformationen durch Schattenbildung an den Außenkonturen des die Information bildenden Reliefs.

Bei reliefbehafteten Informationen ist wesentlich, dass unter Zugrundelegung einer diffusen Beleuchtung waagrechte Flächen des Reliefs Licht aus dem Halbraum empfangen und somit im Bild heller erscheinen als senkrechte Flächen mit steilen Kanten, die nur Licht aus dem Viertelraum empfangen. Entsprechend erscheinen steile Flanken dunkler als waagrechte Flächen. Wird dagegen die Reliefinformation mit gerichtetem Licht beleuchtet, entstehen an den dem Licht zugewandten Flanken Reflexe, während an den gegenüberliegenden Flanken Abschattungen auftreten. Dies führt dazu, dass die Reliefinformationen jeweils hellere und dunklere Ränder aufweisen.

Die zuvor genannten 2D-Bilder können grundsätzlich zur automatischen Erkennung flächiger Informationen und auch bei Reliefinformationen herangezogen werden, wenn die Oberflächen gut beleuchtbar bzw. erkennbar sind und die Randbedingungen in Bezug auf Positionierung, Beleuchtungsverhältnisse, etc. äußerst genau definiert und zeitlich konstant sind. Bereits eine gewisse Rauhigkeit an der Gussoberfläche führt jedoch zu starken Variationen der die Reliefinformationen betreffenden Bilder, die die zuvor angesprochenen indirekten Informationen überlagern. Geringe Änderungen der Lage des die Information tragenden Objekts führt zu starken Helligkeitsänderungen im Bild, da nämlich metallische Gussstücke einen relativ hohen Anteil gerichteter Reflexion aufweisen und sehr häufig sogenannte Glanzlichter an der Oberfläche auftreten. Deren örtliches Auftreten und deren Verteilung schwanken schon bei geringfügiger Lageänderung, so beispielsweise bei Drehung des Objekts, sehr stark. Kratzer an der Oberfläche, Rostflecken, Sandreste etc. führen zu Reflektanzänderungen, wobei die daraus resultierenden Einflüsse die eigentlichen Reliefinformationen überlagern. Die voranstehend genannten Effekte führen jedenfalls dazu, dass ein automatisches Lesen entsprechender Reliefinformationen mit hoher Erkennungsrate und absoluter Reproduzierbarkeit mit den bislang bekannten 2D-Verfahren nicht oder allenfalls bedingt möglich ist.

Der vorliegenden Erfindung liegt nun die Aufgabe zugrunde, ein Verfahren zum automatischen Erkennen von Reliefinformationen auf Oberflächen beliebiger Produkte derart auszugestalten und weiterzubilden, dass das automatische Erkennen der Informationen mit hoher Treffsicherheit und Wiederholbarkeit unter Zugrundelegung einer einfach realisierbaren Methode möglich ist.

Ein ähnliches Verfahren ist z.B. aus DE 10 143 522 A1 bekannt.

Die voranstehende Aufgabe wird durch ein Verfahren gemäß Patentanspruch 1 gelöst. Danach sind folgende Verfahrensschritte vorgesehen:

Zunächst einmal werden die Reliefinformationen mittels 3D-Aufnahmetechnik zur Gewinnung von 3D-Daten aufgenommen. Danach findet eine geometrische Dekomposition der 3D-Daten statt, nämlich in die die Oberfläche ohne Reliefinformationen und in die die isolierten Reliefinformationen betreffenden Daten. Mit anderen Worten werden die Reliefinformationen aus dem das Gesamtbild betreffenden Datensatz herausgelöst, so dass die Reliefinformationen gesondert abbildbar und deren Daten gesondert handhabbar bzw. manipulierbar sind.

In einem nächsten Schritt werden die extrahierten Reliefinformationen als grauwertcodiertes oder binarisiertes Tiefenbild dargestellt. Danach erfolgt eine herkömmliche Zeichenerkennung (OCR) an den Daten des Tiefenbildes oder des Binärbildes, so dass ein Lesen der isolierten Reliefinformationen möglich ist.

Der erfindungsgemäßen Lehre liegt die Erkenntnis zugrunde, dass es sich bei Reliefinformationen, so beispielsweise bei einer Reliefschrift, um 3D-Gebilde handelt. Entsprechend ist die 3D-Aufnahmetechnik das physikalisch geeignete Verfahren.

In vorteilhafter Weise lässt sich die 3D-Aufnahme, d.h. die dreidimensionale Erfassung der Reliefinformationen, durch triangulationsbasierte Verfahren durchführen, wobei sich das Lichtschnittverfahren oder das Streifenprojektionsverfahren besonders eignet.

In weiter vorteilhafter Weise könnten die 3D-Daten mittels eines monokularen Systems gewonnen werden, wobei vorzugsweise eine auf dem Laufzeitprinzip basierende 3D-Kamera verwendet werden könnte. Monokulare Systeme weisen gegenüber binokularen Systemen den Vorteil auf, dass keine Abschattungsproblematik auftritt. Anstelle eines Stereosehens mit zwei normalerweise gegeneinander geneigten Strahlengängen oder triangulationsbasierten Systemen mit ebenfalls zueinander geneigten Beleuchtungs- und Beobachtungsstrahlengängen werden beispielsweise auf dem Laufzeitprinzip oder Time-of-flight oder TOF basierende 3D-Kameras als monokulare Systme verwendet.

Im Gegensatz zu triangulatorisch arbeitenden Systemen beruht das Messverfahren auf dem Lichtlaufzeitverfahren und kann in einem koaxialen Aufbau von Beleuchtung und Empfangsoptik realisiert werden. Die zu vermessende Szene könnte mit hochfrequent modulierter Laserstrahlung beleuchtet, über einen ebenfalls modulierten Bildverstärker abgebildet und mit einer CMOS-Kamera aufgenommen werden. Der Bildverstärker übernimmt dabei somit einerseits die Funktion einer pixelweisen Entfernungsmessung. Andererseits dient er auch der Verstärkung des rückgestreuten Lichts, wodurch nur geringe und damit unbedenkliche Laserintensitäten benötigt werden.

Grundsätzlich lässt sich jedes 3D-Verfahren zur Datengewinnung anwenden, um nämlich Daten betreffend die jeweilige Oberfläche mit den Reliefinformationen zu erhalten.

Die so gewonnenen 3D-Daten sind als Punktwolke im Raum zu sehen und beschreiben die Produktoberfläche in dem jeweils betrachteten Abschnitt, umfassen nämlich sowohl den Untergrund als auch die eigentlich interessierenden Reliefinformationen. So umfassen die 3D-Daten einerseits die Sollgeometrie der Oberfläche ohne Reliefinformationen, d.h. ohne reliefartige Strukturen, und die Reliefinformationen, d.h. die dort aufgebrachten Symbole, Zeichen, etc., die in Form vertiefter oder erhabener Strukturen in bzw. auf der Sollform ausgebildet sind.

Nachdem die 3D-Daten betreffend die Oberfläche bzw. den Untergrund und die Reliefinformationen aufgenommen sind, erfolgt in weiter erfindungsgemäßer Weise eine Dekomposition der 3D-Daten in die die Oberfläche ohne Reliefinformationen und die die isolierten Reliefinformationen betreffenden Daten. Unter Sollform ist die Oberfläche ohne Reliefinformationen zu verstehen. Die Reliefinformationen befinden sich auf der Oberfläche und sind in den insgesamt aufgenommenen Daten enthalten.

Des Weiteren ist wesentlich, dass nach der geometrischen Dekomposition die Reliefinformationen weiterverarbeitet werden können, um sie dann letztendlich einer üblichen Zeichenerkennung (OCR) zuzuführen, so dass die Reliefinformationen nach ihrer Isolierung und gegebenenfalls Aufbereitung wie zweidimensionale Informationen lesbar sind.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels des erfindungsgemäßen Verfahrens anhand der Zeichnung zu verweisen. In Verbindung mit der Erläuterung des bevorzugten Ausführungsbeispiels des erfindungsgemäßen Verfahrens anhand der Zeichnung werden auch im Allgemeinen bevorzugte Ausgestaltungen und Weiterbildungen der Lehre erläutert. In der Zeichnung zeigt
- Fig. 1: ein Flussdiagramm mit den wesentlichen und auch fakultativen Verfahrensschritten des erfindungsgemäßen Verfahrens,
- Fig. 2: in einer schematischen Ansicht eine erhabene Reliefinformation in Form einer Reliefschrift auf der Oberfläche einer zylinderförmigen Sollgeometrie,
- Fig. 3: in schematischen Ansichten eine Abbildung der Sollgeometrie und der Reliefinformationen nach Dekomposition der diesbezüglichen Daten,
- Fig. 4: in einer schematischen Ansicht die Reliefschrift aus Fig. 3 in aufbereiteter (abgewickelter) Form,
- Fig. 5: in einer schematischen Ansicht eine Original-Aufnahme der separierten Reliefinformationen nach Abwicklung/Projektion in Grauwertdarstellung und
- Fig. 6: in einer schematischen Ansicht das Resultat einer grauwertbasierten Zeichenerkennung anhand der aufbereiteten Reliefinformationen aus Fig. 5.

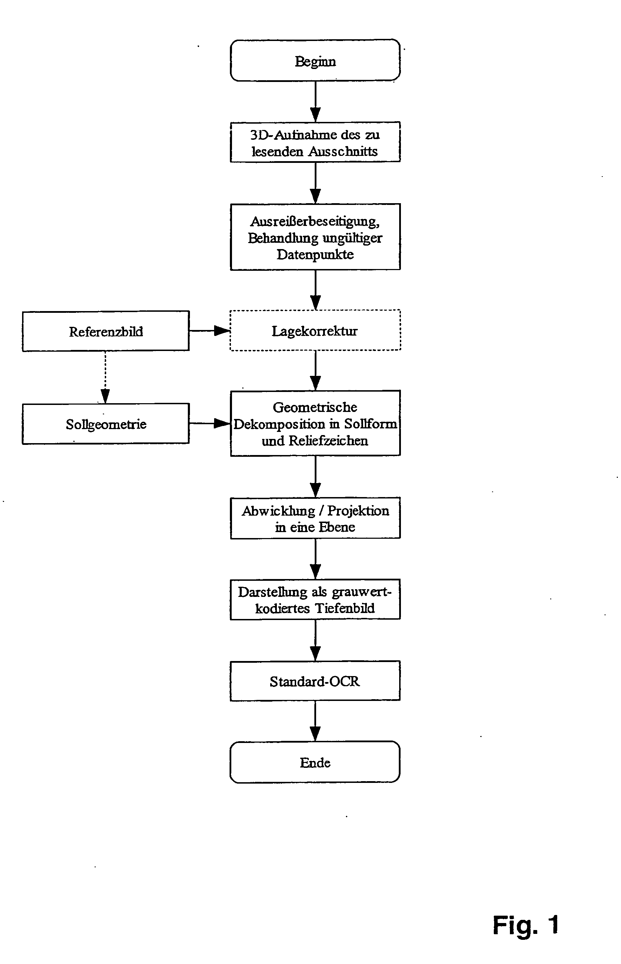

Das Diagramm aus Fig. 1 zeigt die einzelnen Verfahrensschritte des erfindungsgemäßen Verfahrens in der jeweiligen Abfolge, wobei dort auch fakultative Verfahrenschritte einbezogen sind.

Zunächst einmal erfolgt eine 3D-Bildgewinnung, wobei dazu bekannte Triangulationsverfahren nutzbar sind. So kann die 3D-Bildgewinnung mittels Lichtschnittverfahren oder Streifenprojektionsverfahren erfolgen. Ergebnis der 3D-Bildgewinnung ist ein Datensatz betreffend den Untergrund und die Reliefinformationen, wobei lediglich die Reliefinformationen von Interesse sind.

In einem nächsten Schritt lassen sich Mess- und/oder Abbildungsfehler, insbesondere sogenannte Ausreißer, bereinigen bzw. beseitigen. Auch hier können übliche Verfahren Anwendung finden. Dabei geht es insbesondere um die Eliminierung ungültiger Datenpunkte, wobei eine Korrektur und auch ein Auffüllen entsprechender Bereiche mit angepassten Informationen möglich sind.

In einem weiteren Schritt ist eine rechnerische Lagekorrektur zum Ausgleich von Positionierungsungenauigkeiten des Objekts gegenüber dem Aufnahmesystem bzw. der Aufnahmeoptik möglich. Referenzbilder und deren Sollgeometrie können hinzugezogen werden.

In einem nächsten Schritt erfolgt eine Separation der Reliefinformationen, so beispielsweise der erhabenen Schrift, vom Untergrund, nämlich eine geometrische Dekomposition in Sollform und Reliefinformationen bzw. Reliefzeichen.

Handelt es sich bei dem Untergrund bzw. bei der Oberfläche, die die Reliefinformationen trägt, um eine geometrisch geformte (und damit nicht ebene) Oberfläche, so beispielsweise um eine gewölbte Oberfläche, bietet sich eine Abwicklung bzw. Projektion der Reliefinformationen in eine Ebene an.

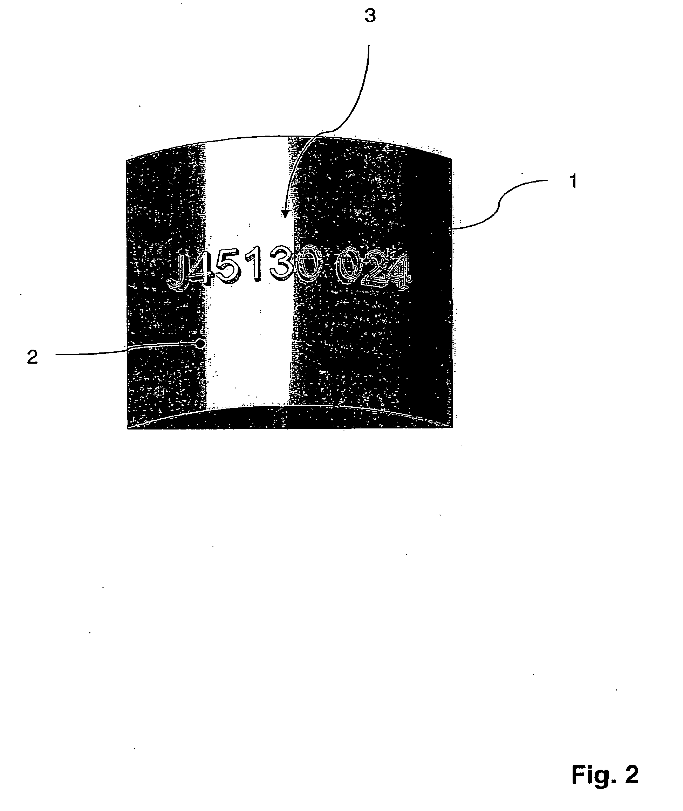

Fig. 2 zeigt in einer schematischen Darstellung einen Körper 1 mit gewölbter Oberfläche 2, auf der Reliefinformationen 3 in Form einer erhabenen Schrift, Buchstaben und Zahlen, ausgebildet sind.

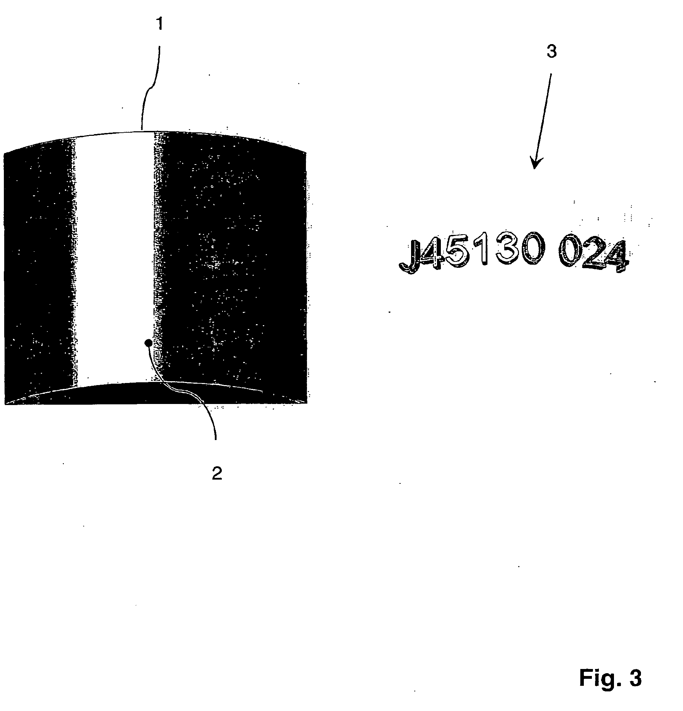

Fig. 3 zeigt einerseits die aus der Gesamtdatenmenge der 3D-Bilddaten separierte Oberfläche 2 und andererseits die von der Oberfläche 2 bzw. vom Untergrund rechnerisch losgelösten Reliefinformationen 3, nach wie vor jedoch in gewölbter Form.

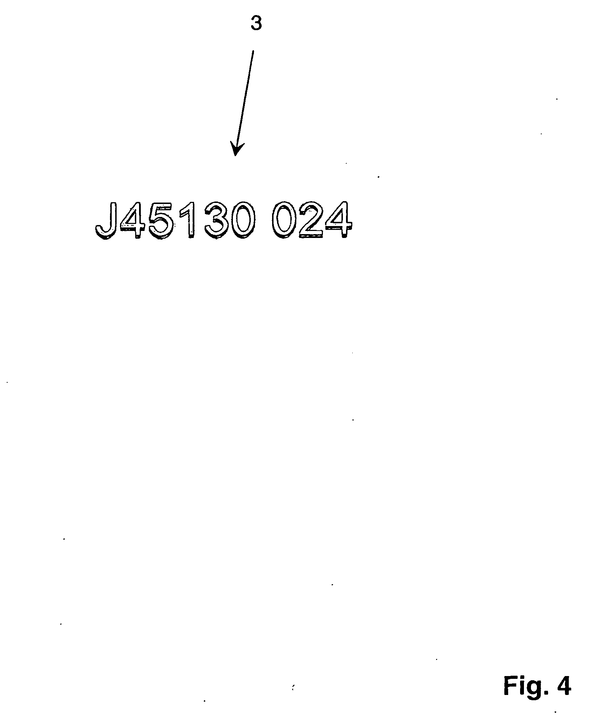

Gemäß Fig. 4 sind die extrahierten Reliefinformationen 3, die gemäß der Darstellung in Fig. 3 zunächst in gewölbter Form extrahiert worden sind, auf eine ebene Fläche projiziert bzw. abgewickelt, so dass die ursprünglich auf einer gewölbten Fläche ausgebildeten Reliefinformationen 3 nunmehr wie eine zweidimensionale Schrift, d.h. als abgewickelte Reliefschrift, zu lesen sind.

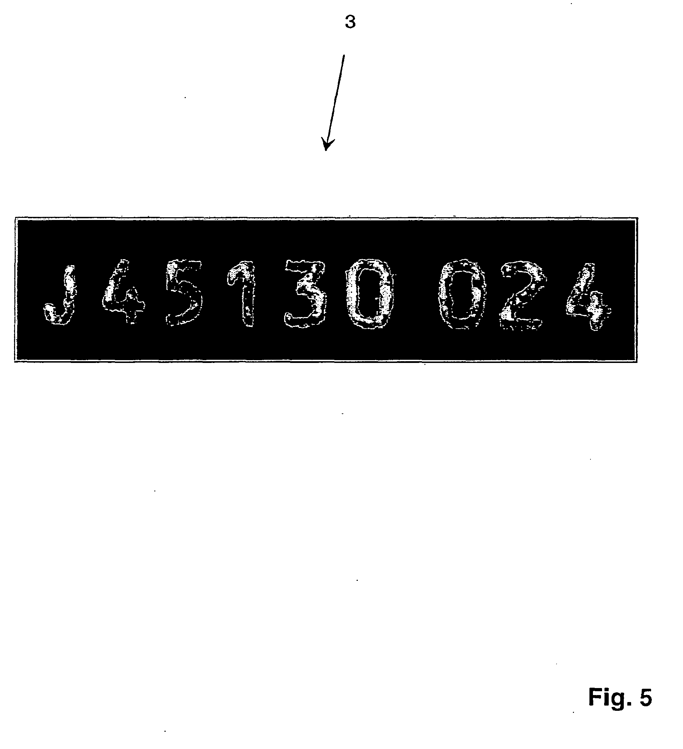

Fig. 5 zeigt eine Original-Aufnahme separierter Reliefinformationen nach deren Abwicklung/Projektion in Grauwertdarstellung, wobei der wiedergegebene Höhenbereich der Erhabenheit der voranstehenden Reliefinformation entspricht und auf den vollen darstellbaren Grauwertbereich gespreizt ist.

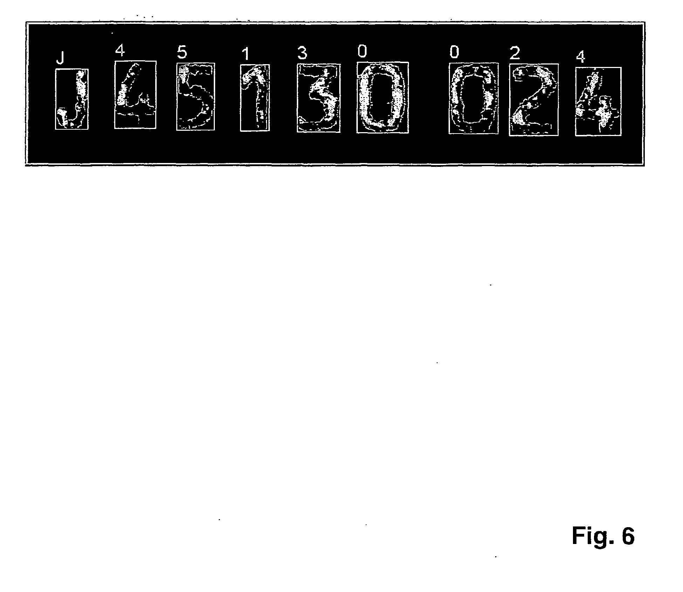

Fig. 6 zeigt das Resultat der grauwertbasierten Zeichenerkennung anhand der Reliefinformationen aus Fig. 5, die sich wie eine zweidimensionale Informationen lesen lässt.

Unter Bezugnahme auf die voranstehend genannten Ausführungen werden nachfolgend die einzelnen Verfahrensschritte näher erläutert.

Die Lagekorrektur dient zur Vorbereitung des Dekompositionsschrittes. Sie gleicht eventuelle Ungenauigkeiten in der Positionierung des zu lesenden Produkts vor dem Aufnahmesystem aus. Für diesen Verarbeitungsschritt ist dem System eine Solllage mitzuteilen. Diese kann aus einem CAD-Datensatz übernommen werden oder durch direktes Einlernen eines Referenzteils erfolgen. Die Lagekorrektur der 3D-Daten kann beispielsweise punktbasiert durch eine iterative Minimierung des Abstands der aktuellen Aufnahme von der Referenz über alle Datenpunkte oder merkmalbasiert über das Auffinden von Kanten, Ecken oder sonstigen eindeutigen und wiedererkennbaren Merkmalen erfolgen, die nach Korrespondenzanalyse die Bestimmung von Translation und Rotation im Raum gestatten. Wichtig hierbei ist, dass sich die Lagekorrektur nicht an der von Teil zu Teil wechselnden Reliefinformationen orientiert, sondern der für jedes Teil gleichbleibende Untergrund bzw. die Umgebung für diesen Verfahrensschritt bestimmend ist. Dies ist beispielsweise bei Wahl eines hinreichend großen aufgenommenen Ausschnittes gegeben, so dass die Reliefinformation nur einen kleinen Anteil der Datenpunkte einnimmt, oder durch geeignete Maskierung des Bereichs der Reliefinformationen erreichbar. Der Lageausgleich kann je nach verwendetem Verfahren entfallen.

Zur Separierung der Schrift vom Untergrund ist eine Beschreibung der Sollform ohne Reliefinformation erforderlich. Diese kann beispielsweise auf folgende Arten bereitgestellt werden.
1. durch CAD-Daten der Sollgeometrie ohne Beschriftung,
2. durch Vermessung eines oder mehrerer Referenzteile ohne Reliefinformation,
3. durch Mittelung vieler Teile mit unterschiedlichen Reliefinformationen, die bei dem Mittelungsschrift herausfallen,
4. durch Best-Fit-Schätzung einer Regelgeometrie (Ebene, Zylinder, Kugelabschnitt oder andere parametrische Flächen)
5. oder durch Ausfilterung feiner Strukturen (und damit Beseitigung der Reliefinformationen) aus den gemessenen Daten.

Gemäß 4. kann bei geringen Ungenauigkeiten in der Positionierung die Lagekorrektur entfallen, da die Sollgeometrie direkt aus den Messdaten des aktuellen Objektes ableitbar ist. Gemäß 5. kann die Lagekorrektur ebenfalls entfallen. Die Gewinnung der Sollgeometrie durch Filterung der feinen reliefartigen Strukturen setzt allerdings voraus, dass die betrachtete Oberfläche keine derart feinen Strukturen aufweist. Dies ist bei den Verfahren 1. bis 4. nicht notwendig. Ein Vorteil des Lageausgleichs liegt darin, dass der Segmentierungsschritt der anschließenden Zeichenerkennung sehr einfach durchzuführen ist, da die Lage jedes einzelnen Zeichens genau bekannt ist, wenn dieses bei der Herstellung des Produktes immer an derselben Stelle angebracht wird.

Nach der Dekomposition bleiben für die weitere Verarbeitung lediglich die erhabenen oder vertieften Zeichen im Raum übrig. Diese können durch eine geeignete Abwicklung in der Schriftrichtung entlang der bekannten Sollgeometrie, d.h. durch Angleichung der lokalen Normalen auf eine feste vorgegebene Richtung, so angeordnet werden, dass sie als Erhöhung (im Falle von erhabenen Schriften) oder Vertiefung (im Falle eingravierten Schrift) über einer ansonsten ebenen Referenzfläche der Höhe Null verbleiben.

Die resultierenden 2½D-Daten (Tiefendaten über x und y) lassen sich in Form eines grauwertkodierten Tiefenbildes darstellen, wobei sinnvollerweise der dargestellte Höhenbereich auf denjenigen der reliefartigen Informationen beschränkt wird oder eine Binarisierung mittels eines geeigneten Schwellwertes erfolgt (dies entspricht der Darstellung eines festgelegten Höhenbereichs in Grauwertcodierung mit den zwei verschiedenen Grauwerten schwarz und weiß) und können danach mittels einer Standard-Zeichenerkennung (binäre oder grauwertbasierte OCR) gelesen werden. Diese Vorgehensschritte bieten eine hohe Lesesicherheit. Mit Verfahren, die ausschließlich grauwertbasiert arbeiten, ist keine vergleichbare Leistung zu erzielen.

Schließlich sei angemerkt, dass das voranstehend erörterte Ausführungsbeispiel zur Erörterung des beanspruchten Verfahrens dient, dieses jedoch nicht auf das Ausführungsbeispiel einschränkt.

## Patentansprüche

1. Verfahren zum automatischen Lesen von Reliefschriften auf Gussteilen,
**gekennzeichnet durch** folgende Verfahrensschritte:
- Aufnahme der Reliefinformationen mittels 3D-Aufnahmetechnik zur Gewinnung von 3D-Daten,
- rechnerische Lagekorrektur zum Ausgleich von Positionierungenauigkeiten des Objekts gegenüber dem Aufnahmesystem, wobei zur Lagekorrektur eine Soll-Lage der Oberfläche zugrunde gelegt wird, deren Daten aus einem CAD-Datensatz oder **durch** Einlesen von Daten eines Referenzteils gewonnen werden,
- Herauslösen der Reliefinformationen **durch** geometrische Dekomposition der 3D-Daten in die die Oberfläche ohne Reliefinformationen und in die die isolierten Reliefinformationen betreffenden Daten **anhand einer Beschreibung** der Oberfläche (Sollform) ohne Reliefinformation,
- Darstellung der extrahierten Reliefinformationen als grauwertcodiertes oder binarisiertes Tiefenbild und
- Zeichenerkennung (OCR) an den Daten des Tiefenbildes oder des Binärbildes,
wobei nach der Dekomposition die die Reliefinformationen betreffenden - isolierten - Daten in Richtung der Reliefinformationen entlang der bekannten Sollgeometrie der Oberfläche in eine Ebene projiziert werden.

2. Verfahren nach Anspruch 1, **dadurch gekennzeichnet, dass** die Reliefinformationen als reliefartige Strukturen mit Erhöhungen und/oder Vertiefungen gegenüber der Oberfläche ausgebildet sind.

3. Verfahren nach Anspruch 1 oder 2, **dadurch gekennzeichnet, dass** die 3D-Daten mittels triangulationsbasiertem Verfahren gewonnen werden, wobei vorzugsweise die 3D-Daten mittels Lichtschnittverfahren oder mittels Streifenprojektionsverfahren gewonnen werden.

4. Verfahren nach Anspruch 1 oder 2, **dadurch gekennzeichnet, dass** die 3D-Daten mittels eines monokularen Systems gewonnen werden, wobei vorzugsweise eine auf dem Laufzeitprinzip basierende 3D-Kamera verwendet wird.

5. Verfahren nach einem der Ansprüche 1 bis 4, **dadurch gekennzeichnet, dass** die aufgenommenen 3D-Daten um Mess- und/oder Abbildungsfehler, insbesondere um sogenannte Ausreißer, bereinigt werden und/oder dass die aufgenommenen 3D-Daten im Bereich ungültiger Datenpunkte korrigiert bzw. aufgefüllt werden.

6. Verfahren nach einem der Ansprüche 1 bis 5, **dadurch gekennzeichnet, dass** Ungenauigkeiten in der Positionierung der aufzunehmenden Oberfläche gegenüber dem Aufnahmesystem bzw. der Aufnahmeoptik durch eine rechnerische Lagekorrektur ausgeglichen werden, wobei vorzugsweise zur Lagekorrektur eine Soll-Lage der Oberfläche zugrunde gelegt wird, wobei weiter vorzugsweise die Daten der Soll-Lage aus einem CAD-Datensatz zur Verfügung gestellt werden oder durch Einlesen von Daten eines Referenzteils gewonnen werden.

7. Verfahren nach Anspruch 6, **dadurch gekennzeichnet, dass** die Lagekorrektur punktbasiert durch eine vorzugsweise iterative Minimierung des Abstands der aktuellen Aufnahme von einer Referenzposition, vorzugsweise über alle Datenpunkte, erfolgt oder dass die Lagekorrektur merkmalbasiert über das Auffinden von Kanten, Ecken oder sonstiger eindeutiger Merkmale erfolgt, wobei vorzugsweise nach einer Korrespondenzanalyse der eindeutigen Merkmale mit den Referenzdaten eine Translation und/oder Rotation der 3D-Daten im Raum erfolgt.

8. Verfahren nach einem der Ansprüche 1 bis 7, **dadurch gekennzeichnet, dass** zur Dekomposition der gewonnenen und ggf. aufbereiteten 3D-Daten, d.h. zur Separierung der Reliefinformationen von dem Untergrund, den Untergrund betreffende Daten ohne die Daten der Reliefinformation herangezogen werden, wobei vorzugsweise die den Untergrund betreffenden Daten als CAD-Daten der Sollgeometrie ohne die Daten der Beschriftung zur Verfügung gestellt werden oder die den Untergrund betreffenden Daten durch Vermessen eines oder mehrerer Referenzteile ohne Reliefinformation zur Verfügung gestellt werden oder die den Untergrund betreffenden Daten durch Mittelung mehrerer Oberflächen mit unterschiedlichen Reliefinformationen zur Verfügung gestellt werden oder die den Untergrund betreffenden Daten durch Best-Fit-Schätzung unter Zugrundelegung einer Regelgeometrie, z.B. einer Ebene, eines Zylinders, eines Kugelabschnitts oder anderer parametrischer Flächen, zur Verfügung gestellt werden oder die den Untergrund betreffenden Daten durch Ausfilterung der die Reliefinformationen betreffenden Strukturen aus den 3D-Daten zur Verfügung gestellt werden.

9. Verfahren nach einem der Ansprüche 1 bis 8, **dadurch gekennzeichnet, dass** nach der Dekomposition die die Reliefinformationen betreffenden - isolierten - Daten in eine Ebene projiziert werden, wobei vorzugsweise die Projektion der Reliefinformationen in eine Ebene durch eine geeignete Abwicklung, vorzugsweise in Richtung der Reliefinformationen und/oder entlang der bekannten Sollgeometrie der Oberfläche, erfolgt und/oder die Projektion in eine Ebene durch Angleichung der lokalen Normalen auf eine fest vorgegebene Richtung erfolgt, wobei die Daten der Reliefinformationen so angeordnet werden, dass sie als Erhöhung oder als Vertiefung über einer sonst ebenen Referenzfläche (Ebene Null) verbleiben.

10. Verfahren nach einem der Ansprüche 1 bis 9, **dadurch gekennzeichnet, dass** die die isolierten Reliefinformationen betreffenden Daten in Bezug auf deren Höhe oder Tiefe ausgewählt werden und/oder dass die die isolierten Reliefinformationen betreffenden Daten als 2½D-Daten (Tiefendaten über x und y) zur Darstellung eines grauwertbasierten oder grauwertcodierten Tiefenbildes wiedergegeben werden oder dass die die isolierten Reliefinformationen betreffenden Daten vorzugsweise nach einer Schwellwertoperation als Binärbild wiedergegeben werden.

11. Verfahren nach einem der Ansprüche 1 bis 10, **dadurch gekennzeichnet, dass** die gewonnenen 2½D-Daten einer herkömmlichen Zeichenerkennung zugeführt werden, wobei vorzugsweise die Zeichenerkennung binär oder grauwertbasiert arbeitet.

## Claims

1. A method for automatically reading relief characters on cast parts,
**characterised by** the following method steps:
- recording of the relief information by means of 3D recording technology to obtain 3D data,
- computerised position correction to compensate for positioning inaccuracies of the object relative to the recording system, wherein a nominal position of the surface is taken as the basis for the position correction, the data of which nominal position are obtained from a CAD data set or by reading-in of data of a reference part,
- extraction of the relief information by geometric decomposition of the 3D data into data relating to the surface without relief information and data relating to the isolated relief information, with the aid of a description of the surface (nominal shape) without relief information,
- representation of the extracted relief information as a greyscale-coded or binarised depth image and
- character recognition (OCR) on the data of the depth image or binary image, wherein, after the decomposition, the isolated data, relating to the relief information, are projected into a plane in the direction of the relief information along the known nominal geometry of the surface.

2. A method according to claim 1, **characterised in that** the relief information is in the form of relief-like structures with elevations and/or depressions relative to the surface.

3. A method according to claim 1 or 2, **characterised in that** the 3D data are obtained by means of a triangulation-based procedure, wherein the 3D data are preferably obtained by means of light-section procedures or by means of strip-projection procedures.

4. A method according to claim 1 or 2, **characterised in that** the 3D data are obtained by means of a monocular system, wherein a 3D camera based on the time-of-flight principle is preferably used.

5. A method according to any one of claims 1 to 4, **characterised in that** the recorded 3D data are cleansed of measurement and/or imaging errors, especially so-called outliers, and/or the recorded 3D data in the region of invalid data points are corrected or filled in.

6. A method according to any one of claims 1 to 5, **characterised in that** inaccuracies in the positioning of the surface to be recorded relative to the recording system or the recording optics are compensated for by computerised position correction, wherein a nominal position of the surface is preferably taken as the basis for the position correction, wherein further the data of the nominal position are preferably provided from a CAD data set or obtained by reading-in of data of a reference part.

7. A method according to claim 6, **characterised in that** the position correction is performed in a point-based manner by a preferably iterative minimisation of the distance of the current recording from a reference position, preferably over all data points, or the position correction is performed in a feature-based manner by means of finding edges, corners or other unambiguous features, wherein preferably after a correspondence analysis of the unambiguous features with the reference data a translation and/or rotation of the 3D data in space is carried out.

8. A method according to any one of claims 1 to 7, **characterised in that** for decomposition of the obtained, and where applicable edited, 3D data, i.e. for separation of the relief information from the background, data relating to the background without the data of the relief information are referred to, wherein preferably the data relating to the background are provided in the form of CAD data of the nominal geometry without the data of the lettering, or the data relating to the background are provided by measurement of one or more reference parts without relief information, or the data relating to the background are provided by averaging a plurality of surfaces having differing relief information, or the data relating to the background are provided by best-fit estimation based on a ruled geometry, for example on a plane, a cylinder, a spherical segment or other parametric surfaces, or the data relating to the background are provided by filtering the structures relating to the relief information out of the 3D data.

9. A method according to any one of claims 1 to 8, **characterised in that**, after the decomposition, the isolated data, relating to the relief information, are projected into a plane, wherein the projection of the relief information into a plane is preferably effected by suitable development, preferably in the direction of the relief information and/or along the known nominal geometry of the surface, and/or the projection into a plane is effected by approximation of the local normal to a predefined direction, wherein the data of the relief information are so arranged that they remain as an elevation or as a depression relative to an otherwise plane reference surface (level zero).

10. A method according to any one of claims 1 to 9, **characterised in that** the data relating to the isolated relief information are selected with reference to the height or depth thereof and/or the data relating to the isolated relief information are reproduced as 2½D data (depth data on x and y) to represent a greyscale-based or greyscale-coded depth image, or the data relating to the isolated relief information are reproduced as a binary image preferably after a threshold operation.

11. A method according to any one of claims 1 to 10, **characterised in that** the 2½D data obtained are delivered to a conventional character recognition, wherein the character recognition preferably operates in a binary or greyscale-based manner.

## Revendications

1. Procédé de lecture automatique d'écritures en relief sur pièces moulées en fonte,
**caractérisé par** les étapes de procédé suivantes consistant à :
- acquérir les informations de relief au moyen d'une technique d'acquisition 3D en vue de récupérer des données 3D,
- correction de position mathématique pour compenser des imprécisions de positionnement de l'objet par rapport au système d'acquisition, dans lequel la correction de position est basée sur une position théorique de la surface dont les données sont récupérées à partir d'un enregistrement de données de DAO ou par la lecture de données d'une pièce de référence,
- extraire les informations de relief par décomposition géométrique des données 3D en données concernant la surface sans informations de relief et en données concernant les informations de relief isolées, à l'aide d'une description de la surface (forme théorique) sans informations de relief,
- représenter les informations de relief extraites comme une image de profondeur codée en niveaux de gris ou binarisée, et
- effectuer une reconnaissance optique de caractères (ROC) sur les données de l'image de profondeur ou de l'image binarisée,
dans lequel, suite à la décomposition, les données concernant les informations de relief - isolées - sont projetées dans un plan dans la direction des informations de relief suivant la géométrie théorique connue de la surface.

2. Procédé selon la revendication 1, **caractérisé en ce que** les informations de relief sont réalisées comme des structures de type relief avec des élévations et/ou des creux par rapport à la surface.

3. Procédé selon la revendication 1 ou 2, **caractérisé en ce que** les données 3D sont récupérées au moyen d'un procédé à base de triangulation, dans lequel les données 3D sont de préférence récupérées au moyen d'un procédé de coupe optique ou au moyen d'un procédé de projection de bandes.

4. Procédé selon la revendication 1 ou 2, **caractérisé en ce que** les données 3D sont récupérées au moyen d'un système monoculaire, dans lequel on utilise de préférence une caméra 3D basée sur le principe du temps de propagation.

5. Procédé selon l'une quelconque des revendications 1 à 4, **caractérisé en ce que** les données 3D acquises sont traitées quant à des erreurs de mesure et/ou de reproduction, en particulier quant à des dites observations extrêmes aberrantes, et/ou **en ce que** les données 3D acquises sont corrigées ou étoffées au niveau de points de données non valables.

6. Procédé selon l'une quelconque des revendications 1 à 5, **caractérisé en ce que** des imprécisions au niveau du positionnement de la surface à acquérir, par rapport au système d'acquisition ou à l'optique d'acquisition, sont compensées par une correction de position mathématique, dans lequel la correction de position est de préférence basée sur une position théorique de la surface, dans lequel également de préférence, les données de la position théorique sont fournies par un enregistrement de données de DAO ou sont récupérées par la lecture des données d'une pièce de référence.

7. Procédé selon la revendication 6, **caractérisé en ce que** la correction de position est effectuée à base de points par une minimisation de préférence itérative de la distance de l'acquisition actuelle d'une position de référence, de préférence sur tous les points de données, ou **en ce que** la correction de position est effectuée à base de particularités par la localisation d'arétes, de coins ou d'autres particularités uniques, dans lequel de préférence après une analyse de correspondance des particularités uniques avec les données de référence, une translation et/ou une rotation des données 3D dans l'espace est/sont effectuée(s).

8. Procédé selon l'une quelconque des revendications 1 à 7, **caractérisé en ce que** pour la décomposition des données 3D récupérées et le cas échéant mises en forme, c'est-à-dire pour la séparation des informations de relief du fond, des données concernant le fond sans les données des informations de relief sont utilisées, dans lequel de préférence les données concernant le fond sont fournies sous forme de données de DAO de la géométrie théorique sans les données de l'écriture, ou les données concernant le fond sont fournies par la mesure d'une ou de plusieurs pièces de référence sans informations de relief, ou les données concernant le fond sont fournies par un calcul de moyenne sur plusieurs surfaces avec différentes informations de relief, ou les données concernant le fond sont fournies par une estimation "best fit" en se basant sur une géométrie réglée, par exemple un plan, un cylindre, un segment sphérique ou d'autres surfaces paramétriques, ou les données concernant le fond sont fournies par le filtrage des structures concernant les informations de relief à partir des données 3D.

9. Procédé selon l'une quelconque des revendications 1 à 8, **caractérisé en ce qu'**après la décomposition, les données concernant les informations de relief - isolées - sont projetées dans un plan, dans lequel de préférence la projection des informations de relief est effectuée dans un plan par un développement adéquat, de préférence dans la direction des informations de relief et/ou suivant la géométrie théorique connue de la surface, et/ou la projection s'effectue dans un plan par une adaptation de la normale locale à une direction explicitement prédéfinie, dans lequel les données des informations de relief sont disposées de telle sorte qu'elles restent comme une élévation ou un creux sur une surface de référence par ailleurs plane (plan zéro).

10. Procédé selon l'une quelconque des revendications 1 à 9, **caractérisé en ce que** les données concernant les informations de relief isolées sont choisies concernant leur hauteur ou profondeur, et/ou **en ce que** les données concernant les informations de relief isolées sont reproduites comme des données 2D1/2 (données de profondeur sur x et y) pour une représentation d'une image de profondeur à base de niveaux de gris ou codée par niveaux de gris, ou **en ce que** les données concernant les informations de relief isolées sont de préférence reproduites après une opération de seuillage comme une image binaire.

11. Procédé selon l'une quelconque des revendications 1 à 10, **caractérisé en ce que** les données 2D1/2 récupérées sont amenées à une reconnaissance optique de caractères conventionnelle, la reconnaissance optique de caractères fonctionnant de préférence de façon binaire ou à base de niveaux de gris.
